# EUROPEAN PATENT SPECIFICATION

(11) **EP 1 368 604 B1**
(45) Date of publication and mention of the grant of the patent: **02.12.2015**
(21) Application number: 02709213.9
(22) Date of filing: 30.01.2002
(51) Int. Cl.: F25J 3/02, C07C 7/04, C10G 70/04

(54) **ADVANCED HEAT INTEGRATED RECTIFIER SYSTEM**
VERBESSERTES WÄRMEINTEGRIERTES REKTIFIKATIONSSYSTEM
SYSTEME PERFECTIONNE DE RECTIFICATION A CHALEUR INTERGREE

(30) Priority: 22.02.2001 US 792091
(43) Date of publication of application: 10.12.2003
(73) Proprietor: Stone & Webster Process Technology, Inc., Houston, TX 77077-2023 (US)
(72) Inventor: CHEN, David, Sugar Land, TX 77479 (US)
(74) Representative: Müller Schupfner & Partner Patent- und Rechtsanwaltspartnerschaft mbB
(86) International application number: PCT/US2002/002586
(87) International publication number: WO 2002/068887

(56) References cited:
- WO-A-01/88447
- DE-A1- 10 013 073
- US-A- 2 247 470
- US-A- 4 033 735
- US-A- 4 496 381
- US-A- 4 675 036
- US-A- 4 689 063
- US-A- 5 602 293
- US-A- 5 979 177
- US-B1- 6 244 070

## Description

### FIELD OF INVENTION

This invention relates to and defines an interrelated and integrated rectification and fractionation system, which together comprise a novel system for achieving the desired fractionation with a minimum energy consumption level. The improved system comprises a rectifier tower having a reflux drum mounted at its top together with a multi-refrigerant core exchanger for tower feed and overhead vapor chilling.

### BACKGROUND OF INVENTION

There are various and many processes and systems known for rectifier systems and more especially known systems for supplying and controlling the heat in the different areas and steps of the rectifier systems.

Among the examples of such known technology are U.S. Patent Nos.1,932,903 to McKee; 2,214,790 to Greenewalt; 2,582,068 to Roberts; 3,186,182 to Grossman et al; 3,444,696 to Geddes et al; 3,555,836, to Schramm; 4,002,042 to Pryor et al; 4,270,940 to Rowles et al; 4,608,068 to Bauer; 4,657, 571 to Gazzi; and 5,505,049 to Coyle et al.

McKee, United States Patent No. 1,932,903, describes a process which comprises liquefying a gas by dissolving it in a strong solution of an organic acid in which the gas is more soluble than in water. The resulting salt solution is then heated to remove the dissolved gas and the gas so recovered is dried by contacting it with liquefied gas in a dephlegmator and the resulting dried gas is then cooled.

Greenewalt, United States. Patent No. 2,214,790 is directed to a separation process adapted for separation of a gaseous mixture in at least a two-stage rectification, with each stage of the rectification being conducted at a different superatmospheric pressure, using a liquid refrigerant which can be converted to the gaseous state under the conditions employed in the separation. More specifically, the process is especially for the separation of ethylene from gaseous hydrocarbon mixtures. Ammonia is the refrigerant of choice for the separation of the components in the gaseous hydrocarbon mixture.

Roberts, United States Patent No. 2,582,068 describes a method and apparatus for the separation of a gaseous mixture, which is initially at a high pressure and recovering the more volatile constituent. The separation process is particularly adapted for binary gaseous mixtures and for separating and recovering the more volatile fraction in a pure or greatly purified condition.

Grossman et al., United States Patent, No. 3,186,182 describes a low temperature, low-pressure system and process for separation of gaseous mixtures and more particularly, for the demethanization of a gas and more particularly a cracked gaseous mixture.

Geddes et al., United States Patent No. 3,444,696 is directed to an improved process for demethanization of a gaseous mixture in order to recover ethylene from a gaseous feed mixture containing substituents both more and less volatile than ethylene. This process comprises subjecting a cooled feed mixture to a fractionator having a rectifying section at the top and a reboiled stripping section below, the feed mixture containing the ethylene. The invention process is described as achieving economic improvement as respects energy consumption required by employing carefully controlled and different temperature levels in the fractionator section and in the rectifying section as well as locations of the introduction of the feedstock and heat removal by heat exchange between the feedstock and the reflux stream in the sections of the fractionator.

Schramm, United States Patent No. 3,555,836 describes a process for separation of an acetylene-rich gaseous mixture and simultaneous production of acetylene, which includes a precooling process carried out in a series of stages at succeedingly lower temperatures. Individual condensates each of which contains a fraction of acetylene are collected from each stage. The condensates so collected are then recombined in a rectification column, to recover the acetylene and a C₂ overhead fraction. This overhead is then scrubbed to remove and recover the acetylene.

Pryor et al., United States Patent No. 4,002,042 describes a process for the separation and recovery of a large (major) portion of the feed gas comprising hydrogen, methane, ethylene and ethane. The feed gas is then passed to a dephlegmator for separation into a vapor stream and a condensate stream. The condensate stream is passed to a demethanizer column where it is fractionated into an overhead methane-hydrogen stream and a bottoms product ethylene-ethane stream.

Rowles et al., United States Patent No. 4,270,940 describes an improved system for recovery of ethane and ethylene from demethanized overhead. The uncondensed vapor effluent from the main reflux condenser is subjected to further condensation and accompanying rectification in a dephlegmator. The liquid condensate from the dephlegmator is then returned to the demethanizer column.

Bauer et al., United States Patent No. 4,608,068 describes process improvement steps adapted to the recovery of C₃+ hydrocarbons from a feed stream such as a refinery waste gas, having hydrogen and C₁ to C₅ hydrocarbons, which comprises the steps of cooling and at least partially condensing the feed stream, and separating the partially condensed feed stream into a liquid fraction and a gaseous fraction.

Gazzi, United States Patent No. 4,657,571 describes a multi-stage process for the recovery of the heavy constituents from a high-pressure hydrocarbon gaseous mixture. The steps include cooling and partial condensation of the hydrocarbon gaseous mixture, separation of the liquid thus obtained from the gaseous mixture and feeding it to a fractionation column. A turbo-expansion is employed for the non-condensed gaseous mixture. The liquid condensed on said turbo-expansion of the gaseous mixture is separated and fed to a fractionation column. The heavy constituents are recovered from the bottom of the column. The gases from the initial fractionation step and from the second step of fractionation after turbo-expansion are then separately or together recompressed to the consignment pressure of the treated gases.

Coyle et al., U.S. Pat. No. 5,505,049 describes a process for removing nitrogen from liquefied natural gas using an enhanced surface, reflux heat exchanger. A relatively warm, high pressure liquefied natural gas is directed counter-currently in heat exchange location with a cool low pressure liquefied natural gas stream to chill the high pressure stream and at least partially vaporize the low pressure stream in a reflux heat exchanger. The vapor so produced strips the low-pressure stream of nitrogen. The cool low-pressure stream is produced by expansion of the chilled high-pressure stream. The vapor produced by this expansion is then combined with the vapor which is produced in the heat exchanger and is removed and recovered from overhead of the heat exchanger. A product of liquefied natural gas, which has low nitrogen content is recovered from the bottom of the heat exchanger.

An exemplary low temperature rectification process for obtaining C2+ or C3+ hydrocarbons from feed gas mixtures is disclosed in United States Patent No. 4,675,036.

United States Patent No. 5,602,293 describes a process for separating a feedstock stream consisting of hydrogen, methane and C3 /C4 hydrocarbons with a pretreatment and at least one-stage partial condensation.

A system and process according to the preamble of claims 1 and 8 respectively is known from the before cited U.S. Pat. No. 4,675,036.

Although many of the above-mentioned prior art processes have met with some success in industry, the energy costs in operating these systems is relatively high. Accordingly, there exists a need in the industry to develop a process which has essentially the same fractionation capability but which reduces energy costs.

### SUMMARY OF THE INVENTION

According to the present invention there is provided an improved separation process and apparatus, which effect excellent fractionation at reduced energy requirements.

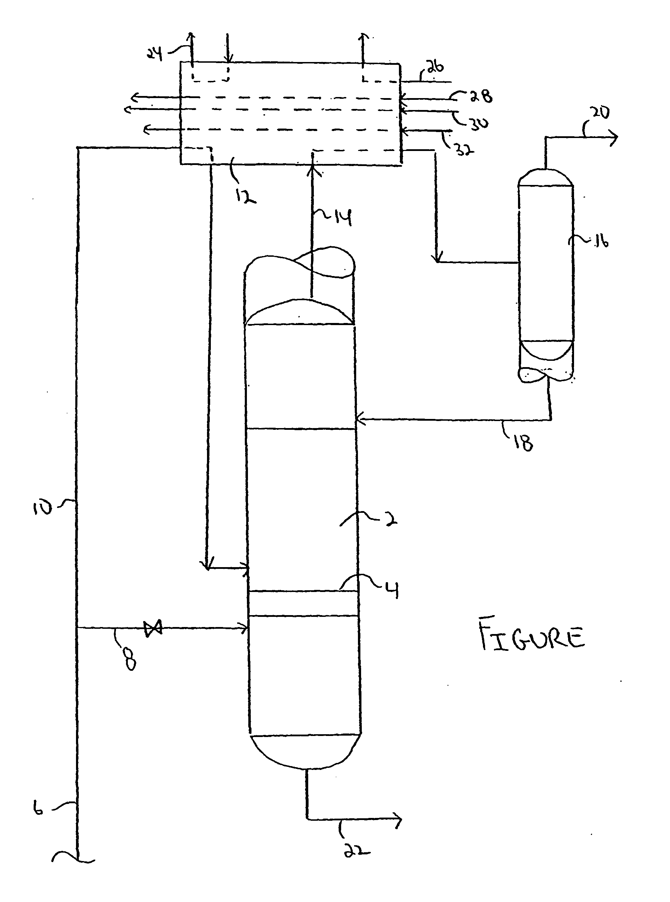

The apparatus of the invention is shown in detail in the accompanying Figure and described in detail herein below. The apparatus comprises a rectifier column which is equipped with fractionation trays, a reflux drum mounted on top of the rectifier tower and an elevated multi-refrigerant core heat exchanger which is used for the tower feed and for the overhead vapor chilling, and a main feed line, which branches into two feed lines, the first of which is directed to a lower portion of the rectifier tower and the second of which is directed through the multi-refrigerant core heart exchanger and then to the rectifier tower at a height above the first feed line.

With respect to the process operation of the system, improved fractionation and separation results with reduced energy requirement, can be achieved with the apparatus of the invention. The hydrocarbon feed stream to the system is initially split into two streams. The first portion of the feed stream is fed into the bottom section of the rectifier tower as stripping vapor. The second portion of the feed stream is chilled in the core heat exchanger and is then passed to the rectifier tower as the tower feed. The tower overhead vapor is also chilled in the core heat exchanger before it is introduced into the reflux drum. The resulting flashed liquid from the reflux drum is returned to the rectifier tower by gravity flow as reflux liquid.

### BRIEF DESCRIPTION OF THE DRAWING

The Figure is a schematic diagram of the advanced heat integrated rectifier system of the invention consisting of a rectifier tower, a reflux drum mounted at the top of the rectifier tower, an elevated multi-refrigerant heat exchanger adapted for tower feed and overhead vapor chilling, and feed system.

### DETAILED DESCRIPTION OF THE INVENTION

Referring to the Figure, the rectifier tower 2 is the base for the rectifier system. The tower 2 is equipped with fractionation trays 4 as necessary for the appropriate desired fractionation step. The main feed line 6 to the rectifier tower is divided into two feed lines. The first feed line 8 contains a minor portion of the feed, i.e. from about 5% to about 50% of the feed, more preferably 25% to about 35%. The second feed line 10 contains the remaining major portion of the total feed.

The small (minor) portion of the feed stream is passed via line 8 into a bottom portion of the rectifier tower and functions as the stripping vapor for the system.

The major portion of the feed stream is passed via line 10 to an elevated core exchanger 12 wherein it is initially chilled before it is passed to the rectifier tower 2 as feed at a height above the entry point of the first feed line 8. Additionally, the tower overhead vapor in a line 14 is also chilled in the core heat exchanger 12 before passing to the reflux drum 16 for flashing. During the period of operation, the liquid which is flashed from the tower reflux drum is returned via gravity flow through line 18 to the tower as reflux liquid. The recovered vapor is removed from the top of the reflux drum 16 through product line 20. The liquids from the tower 2 are recovered in a line 22 for further processing.

In a preferred embodiment of the present invention, the cooling duty of the core exchanger 12 is effected by more than one refrigerated type. For example, in the Figure, refrigerant passage 24 can comprise one or more ethylene refrigerant streams; refrigerant passages 26 and 28 can comprise an expanded process vapor, refrigerant passage 30 can comprise a hydrogen refrigerant, and refrigerant passage 32 can comprise a methane refrigerant.

In such an embodiment for recovery of ethylene, the main feed line 6 can be at a temperature in the range of about -30°C to about -85°C. Refrigerant passages in exchanger 12 exit at a temperature of about 1 to 3°C colder than the feed stream 10. The liquid leaving the bottom of the tower 2 will be at a temperature of about 3 to 10°C colder than the feed stream 8 temperature.

The apparatus and process for which it permits use have advantages over the systems and devices which are presently known for the rectification and separation steps. One of these known devices for such fractionation separations is embraced by and included in conventional rectification systems. The novel heat integrated rectifier system of the invention is more efficient in the utilization of energy than are the known, conventional systems. In the typical conventional system, the temperature approach in the core heat exchanger is between the return temperature of the refrigerant streams and the rectifier overhead temperature.

By comparison, in the heat integrated rectifier system of the present invention, the temperature approach is between the return temperature of the refrigerant streams and the temperature of the rectifier feed temperature.

Under such flow scheme, operating in accord with the system of the invention can maximize the utilization of a warmer level refrigerant, thereby reducing the requirements for colder level refrigerant required by conventional known rectifier systems. This advantage results in substantial savings in refrigeration power.

Furthermore, the heat integrated rectifier system herein described is an improvement over the known dephlegmator systems. Both of these apparatus and processes are able to achieve and meet similar fractionation requirements. However, the herein described and claimed heat integrated rectifier system is more energy efficient because it allows the utilization of more of the available warm level duty in the process refrigerant streams.

In addition, it is an advantage that the heat integrated rectifier system of the invention is a more compact design than that of the dephlegmator. The operating principle of the dephlegmator is based on condensed liquid film runback fractionation which, for success, requires low velocities for the process gas. Thus, it is necessary that the size of the dephlegmator be larger than that of the heat integrated rectifier system of the invention process. For example, for a 700 KTA ethylene plant using the heat integrated rectifier system of the invention, the estimated plot size for the operation is 10 ft. by 20 ft. plus pipe rack area of 5 ft. by 20 ft. to support the core exchanger. If a dephlegmator system such as described in McCue et al. 4,900,317 were used for the same plant operation, the plot size needed would be significantly larger. Other advantages of the invention apparatus compact design include ease of moving and shipping, transportation, erection, and a lesser tendency for heat leakage due to the reduced surface area of the cold box and rectifier as compared to the dephlegmator system.

To summarize, the system of the invention provides an improved, energy efficient, and reduced capital cost method to achieve the fractionation results as compared with systems now known and currently used for light hydrocarbon fractionation in ethylene or natural gas separation plants.

## Claims

1. An advanced heat integrated rectifier system for fractionation, separation, and recovery of low molecular weight hydrocarbon feed mixtures which comprises in combination a rectifier tower (2) having a series of fractionation trays (4), a reflux drum (16) of said rectifier tower, and an elevated multi-refrigerant core heat exchanger (12) connected thereto and a feed system comprising a main feed line (6), a feed splitting means for splitting said main feed line into a first feed line (8) which is passed to a lower portion of the said rectifier tower and a second feed line (10) which is directed through said core heat exchanger and then to said rectifier tower at an elevation above-said first feed line **characterised in that** said first feed line contains a smaller portion from 5 to below 50 percent of the feed from the main feed line and the second feed line contains the remaining larger portion of the total feed and that the reflex drum is at the upper section of said rectifier tower.

2. The advanced heat integrated rectifier system of claim 1 in which the rectifier tower (2) has at least three fractionation trays.

3. The advanced heat integrated rectifier system of claim 1 in which the reflux drum (16) is at the top of said rectifier tower.

4. The advanced heat integrated rectifier system of claim 1 in which the multi-refrigerant core heat exchanger (12) is adapted for both chilling feed to the tower and to provide overhead vapor chilling.

5. The advanced heat integrated rectifier system of claim 1 wherein the feed splitting means comprises means for initially dividing the hydrocarbon feed stream (6) into two portions, the smaller portion (8) of the feed stream being passed into the lower portion of said rectifier tower and the larger portion of the feed stream being chilled in said core heat exchanger prior to the introduction into said rectifier tower as feed.

6. The advanced heat integrated rectifier system of claim 5 in which the said smaller portion of the feed stream (8) is introduced into the bottom of the rectifier tower and whereby it functions as stripping vapor for the system.

7. The advanced heat integrated rectifier system of claim 5 in which the vapor stream (14) from the upper portion of the rectifier tower is all chilled in the core heat exchanger (12) prior to its return to the reflux drum (16).

8. A process for separating a lighter gaseous component from a heavier gaseous component with an advanced heat integrated rectifier system for fractionation, separation, and recovery of low molecular weight hydrocarbon feed mixtures, said process of treating a low molecular weight hydrocarbon feed mixtures comprises,
(a) splitting a main feed line (6) into a first feed line (8) and a second feedline (10);
(b) directing said first feed line (8) to a lower portion of a rectifying tower (2) as a stripping vapor;
(c) chilling said second feed line (10) in an overhead core heat exchanger (12);
(d) feeding said chilled second feed line (10) to a portion of said rectifying tower above said first feed line for rectification;
(e) removing an overhead vapor (14) from said tower and chilling and partially condensing said overhead vapor in said core heat exchanger and separating the partially condensed liquid from the remaining vapor;
(f) returning said partially condensed liquid (18) to said tower as reflux;
(g) recovering said remaining vapor (20) as a separated lighter gaseous component; and
(h) recovering liquid (22) comprising the heavier component from the tower bottom;
**characterised in that** said first feed line contains from 5 to below 50 percent of the feed from the main feed line and the second feed line contains the remaining portion of the total feed.

9. A process as defined in claim 8 wherein said lighter gaseous component (20) comprises hydrogen and methane.

10. A process as defined in claim 8 wherein said first feed line (8) is directed to a portion of said tower below the first tray.

11. A process as defined in claim 8 wherein said core heat exchanger (12) has a colder section near the entry of the refrigeration streams and a warmer section near the rest of the refrigeration streams and the second feed line (10) is chilled in said warmer portion of said overhead core heat exchanger.

12. A process as defined in claim 11 wherein said overhead vapor (14) is chilled and partially condensed in said colder portion of said overhead core heat exchanger.

13. The advanced heat integrated rectifier system of claim 1 wherein said first feed line (8) contains from 25 to 35 percent of the feed from the main feed line and the second feed line (10) contains the remaining portion of the total feed.

## Patentansprüche

1. Verbessertes wärmeintegriertes Rektifikationssystem zur Fraktionierung, Trennung und Aufbereitung von Einsatzgemischen von Kohlenwasserstoffen mit geringem Molekulargewicht, das in Kombination umfasst: eine Rektifikationskolonne (2), mit einer Reihe von Fraktionierböden (4), einen Rückflussbehälter (16) der Rektifikationskolonne und einen daran angeschlossenen erhöhten Innenwärmetauscher (12) mit mehreren Kühlmitteln und ein Zuführungssystem, umfassend eine Hauptzuleitung (6), eine Zuführungsteilungsvorrichtung zur Teilung der Hauptzuleitung in eine erste Zuleitung (8), die zu einem unteren Teil der Rektifikationskolonne geführt wird, und eine zweite Zuleitung (10), die durch den Innenwärmetauscher und danach zu der Rektifikationskolonne auf einer Höhe oberhalb der ersten Zuleitung geführt wird, **dadurch gekennzeichnet, dass** die erste Zuleitung einen kleineren Teil von 5 % bis unter 50 % des Eintrags aus der Hauptzuleitung enthält und die zweite Zuleitung den restlichen größeren Teil des Gesamteintrags enthält und dass sich der Rückflussbehälter am oberen Teil der Rektifikationskolonne befindet.

2. Verbessertes wärmeintegriertes Rektifikationssystem nach Anspruch 1, wobei die Rektifikationskolonne (2) mindestens drei Fraktionierböden aufweist.

3. Verbessertes wärmeintegriertes Rektifikationssystem nach Anspruch 1, wobei sich der Rückflussbehälter (16) oben an der Rektifikationskolonne befindet.

4. Verbessertes wärmeintegriertes Rektifikationssystem nach Anspruch 1, wobei der Innenwärmetauscher (12) mit mehreren Kühlmitteln sowohl zur Kühlung der Zufuhr zu der Kolonne als auch zur Bereitstellung der Kühlung des Überkopfdampfes angepasst ist.

5. Verbessertes wärmeintegriertes Rektifikationssystem nach Anspruch 1, wobei die Zuführungsteilungsvorrichtung eine Vorrichtung zur anfanglichen Teilung des Kohlenwasserstoffzustroms (6) in zwei Teile umfasst, wobei der kleinere Teil (8) des Zustroms in den unteren Teil der Rektifikationskolonne geführt wird und der größere Teil des Zustroms in dem Innenwärmetauscher vor der Einleitung als Einsatzgut in die Rektifikationskolonne gekühlt wird.

6. Verbessertes wärmeintegriertes Rektifikationssystem nach Anspruch 5, wobei der kleinere Teil (8) des Zustroms in den unteren Teil der Rektifikationskolonne eingeleitet wird und wodurch er als Strippdampf für das System wirkt.

7. Verbessertes wärmeintegriertes Rektifikationssystem nach Anspruch 5, wobei der gesamte Dampfstrom (14) aus dem oberen Teil der Rektifikationskolonne in dem Innenwärmetauscher (12) vor seiner Rückführung in den Rückflussbehälter (16) gekühlt wird.

8. Verfahren zum Abtrennen einer leichteren gasförmigen Komponente von einer schwereren gasförmigen Komponente mit einem verbesserten wärmeintegrierten Rektifikationssystem zur Fraktionierung, Trennung und Aufbereitung von Einsatzgemischen von Kohlenwasserstoffen mit geringem Molekulargewicht, wobei das Verfahren der Behandlung von Einsatzgemischen von Kohlenwasserstoffen mit geringem Molekulargewicht umfasst:
(a) Teilen einer Hauptzuleitung (6) in eine erste Zuleitung (8) und eine zweite Zuleitung (10);
(b) Führen der ersten Zuleitung (8) zu einem unteren Teil einer Rektifikationskolonne (2) als Strippdampf;
(c) Kühlen der zweiten Zuleitung (10) in einem oben liegenden Innenwärmetauscher (12);
(d) Zuführen der gekühlten zweiten Zuleitung (10) zu einem Teil der Rektifikationskolonne oberhalb der ersten Zuleitung zur Rektifikation;
(e) Abziehen eines Überkopfdampfes (14) von der Kolonne und Abkühlen und teilweises Kondensieren des Überkopfdampfes in dem Innenwärmetauscher und Abtrennen der teilweise kondensierten Flüssigkeit von dem verbleibenden Dampf;
(f) Zurückführen der teilweise kondensierten Flüssigkeit (18) als Rücklauf zu der Kolonne;
(g) Gewinnen des verbleibenden Dampfes (20) als abgetrennte leichtere gasförmige Komponente; und
(h) Gewinnen der Flüssigkeit (22), umfassend die schwerere Komponente von dem Kolonnenboden;
**dadurch gekennzeichnet, dass** die erste Zuleitung von 5 % bis unter 50 % des Eintrags aus der Hauptzuleitung enthält und die zweite Zuleitung den restlichen Teil des Gesamteintrags enthält.

9. Verfahren wie definiert in Anspruch 8, wobei die leichtere gasförmige Komponente (20) Wasserstoff und Methan umfasst.

10. Verfahren wie definiert in Anspruch 8, wobei die erste Zuleitung (8) zu einem Teil der Kolonne unterhalb des ersten Bodens geführt wird.

11. Verfahren wie definiert in Anspruch 8, wobei der Innenwärmetauscher (12) einen kälteren Bereich in der Nähe des Eintritts der Kühlströme und einen wärmeren Bereich in der Nähe der restlichen Kühlströme aufweist und die zweite Zuleitung (10) in dem wärmeren Teil des oben liegenden Innenwärmetauschers gekühlt wird.

12. Verfahren wie definiert in Anspruch 11, wobei der Überkopfdampf (14) abgekühlt und teilweise kondensiert wird in dem kälteren Teil des oben liegenden Innenwärmetauschers.

13. Verbessertes wärmeintegriertes Rektifikationssystem nach Anspruch 1, wobei die erste Zuleitung (8) von 25 % bis 35 % des Eintrags aus der Hauptzuleitung enthält und die zweite Zuleitung (10) den restlichen Teil des Gesamteintrags enthält.

## Revendications

1. Système perfectionné de rectification à chaleur intégrée pour le fractionnement, la séparation et la récupération des mélanges de charge d'alimentation en hydrocarbures à faible poids moléculaire, qui comprend, en combinaison avec une tour de rectification (2) ayant une série de trémies de fractionnement (4), un tambour de reflux (16) de ladite tour de rectification et un échangeur de chaleur à coeur multi-réfrigérant élevé (12), relié à celle-ci, et un système d'alimentation comprenant une ligne d'alimentation principale (6), un moyen de division de la charge d'alimentation pour diviser ladite ligne d'alimentation principale en une première ligne d'alimentation (8), qui passe dans une partie inférieure de ladite tour de rectification et en une seconde ligne d'alimentation (10) qui est dirigée à travers ledit échangeur de chaleur à coeur et puis vers ladite tour de rectification au niveau d'une élévation au-dessus de ladite première ligne d'alimentation, **caractérisé en ce que** ladite première ligne d'alimentation contient une partie plus faible, allant de 5 à moins de 50 %, de la charge provenant de la ligne d'alimentation principale et la seconde ligne d'alimentation contient la plus grosse partie restante de la charge d'alimentation totale et **en ce que** le tambour de reflux est situé au niveau de la section supérieure de ladite tour de rectification.

2. Système perfectionné de rectification à chaleur intégrée selon la revendication 1, dans lequel la tour de rectification (2) possède au moins trois trémies de fractionnement.

3. Système perfectionné de rectification à chaleur intégrée selon la revendication 1, dans lequel le tambour de reflux (16) est situé en haut de ladite tour de rectification.

4. Système perfectionné de rectification à chaleur intégrée selon la revendication 1, dans lequel l'échangeur de chaleur à coeur multi-réfrigérant (12) est adapté à la fois pour l'alimentation de refroidissement à la tour et pour fournir un refroidissement par vapeur de tête.

5. Système perfectionné de rectification à chaleur intégrée selon la revendication 1, dans lequel le moyen de division de l'alimentation comprend un moyen pour diviser dès le départ le courant de la charge d'alimentation en hydrocarbures (6) en deux parties, la partie plus faible (8) du courant de la charge d'alimentation passant dans la partie inférieure de ladite tour de rectification et la plus grosse partie du courant de la charge d'alimentation étant refroidie dans ledit échangeur de chaleur à coeur avant l'introduction dans ladite tour de rectification sous forme de charge d'alimentation.

6. Système perfectionné de rectification à chaleur intégrée selon la revendication 5, dans lequel ladite partie plus faible du courant de la charge d'alimentation (8) est introduite dans le bas de la tour de rectification, ce qui lui permet de faire office de vapeur de strippage pour le système.

7. Système perfectionné de rectification à chaleur intégrée selon la revendication 5, dans lequel le courant de vapeur (14) provenant de la partie supérieure de la tour de rectification est totalement refroidi dans l'échangeur de chaleur à coeur (12) avant son retour dans le tambour de reflux (16).

8. Procédé de séparation d'un composant gazeux plus léger et d'un composant gazeux plus lourd avec un système perfectionné de rectification à chaleur intégrée pour le fractionnement, la séparation, et la récupération des mélanges de charge d'alimentation en hydrocarbures à faible poids moléculaire, ledit procédé de traitement d'un mélange de charge d'alimentation en hydrocarbures à faible poids moléculaire consistant à :
(a) diviser une ligne d'alimentation principale (6) en une première ligne d'alimentation (8) et en une seconde ligne d'alimentation (10),
(b) diriger ladite première ligne d'alimentation (8) vers une partie inférieure d'une tour de rectification (2) en tant que vapeur de strippage ;
(c) refroidir ladite seconde ligne d'alimentation (10) dans un échangeur de chaleur à coeur de tête (12) ;
(d) charger ladite seconde ligne d'alimentation (10) refroidie dans une partie de ladite tour de rectification au-dessus de ladite première ligne d'alimentation pour être rectifiée ;
(e) retirer une vapeur de tête (14) de ladite tour et refroidir et partiellement condenser ladite vapeur de tête dans ledit échangeur de chaleur à coeur et séparer le liquide partiellement condensé de la vapeur restante ;
(f) renvoyer ledit liquide partiellement condensé (18) vers ladite tour sous forme de reflux ;
(g) récupérer ladite vapeur restante (20) sous forme de composant gazeux plus léger séparé ; et
(h) récupérer le liquide (22) comprenant le composant plus lourd provenant du bas de la tour ;
**caractérisé en ce que** ladite première ligne d'alimentation contient de 5 à moins de 50 % de la charge d'alimentation provenant de la ligne d'alimentation principale et la seconde ligne d'alimentation contient la partie restante de la charge d'alimentation totale.

9. Procédé selon la revendication 8, dans lequel ledit composant gazeux plus léger (20) comprend de l'hydrogène et du méthane.

10. Procédé selon la revendication 8, dans lequel ladite première ligne d'alimentation (8) est dirigée vers une partie de ladite tour en dessous de la première trémie.

11. Procédé selon la revendication 8, dans lequel ledit échangeur de chaleur à coeur (12) possède une section plus froide près de l'entrée des courants de réfrigération et une section plus chaude près du reste des courants de réfrigération et la seconde ligne d'alimentation (10) est refroidie dans ladite partie plus chaude dudit échangeur de chaleur à coeur de tête.

12. Procédé selon la revendication 11, dans lequel ladite vapeur de tête (14) est refroidie et partiellement condensée dans ladite section plus froide dudit échangeur de chaleur à coeur de tête.

13. Système perfectionné de rectification à chaleur intégrée selon la revendication 1 dans lequel ladite première ligne d'alimentation (8) contient de 25 à 35 % de la charge d'alimentation provenant de la ligne d'alimentation principale et la seconde ligne d'alimentation (10) contient la partie restante de la charge d'alimentation totale.
